# EUROPEAN PATENT APPLICATION

(11) **EP 2 296 377 A1**
(43) Date of publication of application: **16.03.2011**
(21) Application number: 09768746.1
(22) Date of filing: 03.06.2009
(51) Int. Cl.: H04N 7/173

(54) **METHOD, APPARATUS AND SYSTEM FOR CONTENT SWITCHING IN CONTENT ON DEMAND**

(30) Priority: 25.06.2008 CN 200810115608; 09.12.2008 CN 200810186978
(71) Applicant: Huawei Technologies Co., Ltd., Longgang District, Shenzhen Guangdong 518129 (CN)
(72) Inventor: WANG, Feng, Longgang District 518129 Shenzhen (CN); HE, Xiaoyan, Longgang District 518129 Shenzhen (CN); HUANG, Lingzhi, Longgang District 518129 Shenzhen (CN)
(74) Representative: Kreuz, Georg Maria
(86) International application number: PCT/CN2009/072114
(87) International publication number: WO 2009/155821

(57) **Abstract**

A method, device, and system for the COD service are provided herein. The method includes: receiving the current COD ID sent by the UE; determining the CID list that can reuse the media channel corresponding current COD ID; performing content switching based on the CID list. The present invention saves the network resources and increases the speed of content switching.

## Description

This application claims priority to Chinese Patent Application No. 200810115608.3, filed with the Chinese Patent Office on June 25, 2008 and entitled "METHOD, DEVICE, AND SYSTEM FOR CONTENT SWITCHING IN THE ON DEMAND SERVICE" and Chinese Patent Application No. 200810186978.6, filed with the Chinese Patent Office on December 9, 2008 and entitled "METHOD, DEVICE, AND SYSTEM FOR CONTENT SWITCHING IN THE CONTENT ON DEMAND SERVICE", which are hereby incorporated by reference in their entireties.

### FIELD OF THE INVENTION

The present invention relates to the field of network technologies, especially to a method, a device, and a system for content switching in the Content On Demand (COD) service.

### BACKGROUND

Internet Protocol Television (IPTV) is a technology of providing, based on IP network transmission with the television or personal computer as the display device, diversified broadband services such as the digital television, video services, information services, interactive leisure service, and e-business to subscribers. The streaming media service is the core service of IPTV. The user equipment (UE) can receive streaming media by using the on-demand method or broadcast method. For the COD service, the unicast method is used at the network side to establish the one-to-one transmission channel between the network device and the UE, and transmit streaming media to the UE. This service requires a large network bandwidth. Currently, if the COD content switching is required, a session request needs to be initiated again to re-establish the channel between the network device and the UE. The inventor finds that the current technology has at least the following problems: A channel needs to be established again to perform content switching. The same channel, however, may have been established in the previous use of the COD service. This causes waste in network resources, consumes the bandwidth of the backbone network, and requires a long time of content switching, which affects user experience.

### SUMMARY

A method, a device, and a system for content switching in the COD services are provided by the present invention to support effective utility of network resources and increase the speed of content switching.

According to the first aspect of the present invention a method for content switching in the COD service is provided. The method includes:
receiving the current COD identifier (ID) sent by the UE;
determining the CID list that can reuse the media channel corresponding to the current COD ID; and
switching the content based on the content identifier (CID) list.

According to the second aspect of the present invention a device for content switching in the COD service is provided. The device includes:
a receiving module, configured to receive the current COD ID sent by the UE;
a determining unit, configured to determine the CID list that can reuse the media channel corresponding to the current COD ID; and
a switching unit, configured to perform content switching based on the CID list.

A system for content switching in the COD service is provided in an embodiment of the present invention. The system includes:
a first Service Control Function entity (SCF entity), configured to receive the current COD ID sent by the UE; and
a first Media Function entity (MF entity), configured to: determine the CID list that can reuse the media channel corresponding to the current COD ID, and perform content switching based on the CID list.

According to the third aspect of the present invention a system for content switching in the COD service is provided. The system includes:
a second SCF entity, configured to: receive the current COD ID sent by the UE, and determine the CID list that can reuse the media channel corresponding to the current COD ID; and
a second MF entity, configured to perform content switching based on the CID list.

It can be seen from the above technical solution that, according to the present invention, the CID list that can reuse the media channel corresponding to the current COD ID is determined; when a content switching request containing a CID in the CID list is initiated, the media channel that is previously established rather than a new media channel is used to send relevant content. The present invention has the following advantages:
1. The media channels in the network are reused, which saves network resources;
2. It is unnecessary to establish a new media channel, but the previous media channel is directly reused, which increases the speed of content switching.

### BRIEF DESCRIPTION OF THE DRAWINGS

The accompanying drawings are intended for better understanding of the present invention and constitute part of this application rather than limitation of the present invention. The descriptions of the drawings are as follows:
FIG. 1 is a flowchart of a method for content switching in the COD service according to a first embodiment of the present invention;
FIG. 2 is a flowchart of a method for content switching in the COD service according to a second embodiment of the present invention;
FIG. 3 is a flowchart of a method for content switching in the COD service according to a third embodiment of the present invention;
FIG. 4 is a flowchart of a method for content switching in the COD service according to a fourth embodiment of the present invention;
FIG. 5 is a flowchart of a method for content switching in the COD service according to a fifth embodiment of the present invention;
FIG. 6 is a flowchart of a method for content switching in the COD service according to a sixth embodiment of the present invention;
FIG. 7 is a flowchart of a method for content switching in the COD service according to a seventh embodiment of the present invention;
FIG. 8 shows the structure of a device for content switching in the COD service according to a first embodiment of the present invention;
FIG. 9 shows the structure of a device for content switching in the COD service according to a second embodiment of the present invention;
FIG. 10 shows the structure of a device for content switching in the COD service according to a third embodiment of the present invention;
FIG. 11 shows the structure of a device for content switching in the COD service according to a fourth embodiment of the present invention;
FIG. 12 shows the structure of a system for content switching in the COD service according to a first embodiment of the present invention; and
FIG. 13 shows the structure of a system for content switching in the COD service according to a second embodiment of the present invention.

### DETAILED DESCRIPTION

The following provides details about the technical solution of the present invention based on the drawings and embodiments.

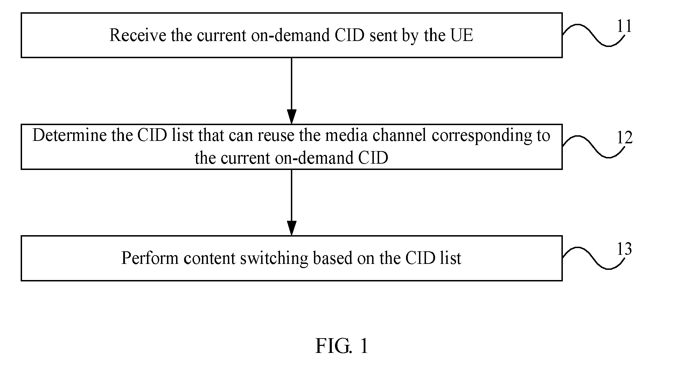

FIG. 1 is a flowchart of a method for content switching in the COD service according to a first embodiment. The method includes:
Step 11: The network device receives the current COD ID sent by a UE. The current COD ID may be carried in the current-content-on-demand message, and is used for the UE to obtain the current on-demand content.
Step 12: The network device determines the CID list that can reuse the media channel corresponding to the current COD ID. First, the network device determines the switching CIDs that can reuse the media channel corresponding to the current COD ID. The content corresponding to the switching CIDs and the current on-demand content corresponding to the current COD ID must be in the same Media Function entity (MF entity), and/or the bandwidth of the media channel for transmitting switched contents cannot be larger than that of the media channel transmitting the current on-demand content. The switching CIDs form the CID list.
Step 13: The network device performs content switching based on the CID list.

The network device can send the CID list to the UE. Then, the UE sends a switching message that carries a switching CID in the CID list to instruct the network device to perform content switching based on this switching CID. For details, refer to the following embodiments 2 to 4.

The network device may also obtain the CID list based on the playlist configured at the UE and needs not send the CID list to the UE. After sensing that content switching is required, the network device performs content switching automatically. The network device senses the content switching as required if the current on-demand content is played or the network device needs to transmit new content. In addition, the network device can perform content switching directly without notifying the UE or can notify the UE and perform content switching after receiving the content switching message from the UE. For details, refer to the following embodiments 5 to 6.

In this embodiment, the CID list that can reuse the media channel is determined, and then the UE initiates a switching request based on the obtained CID. In this way, it is unnecessary to establish a new media channel, thus saving the network resources and increasing the speed of content switching.

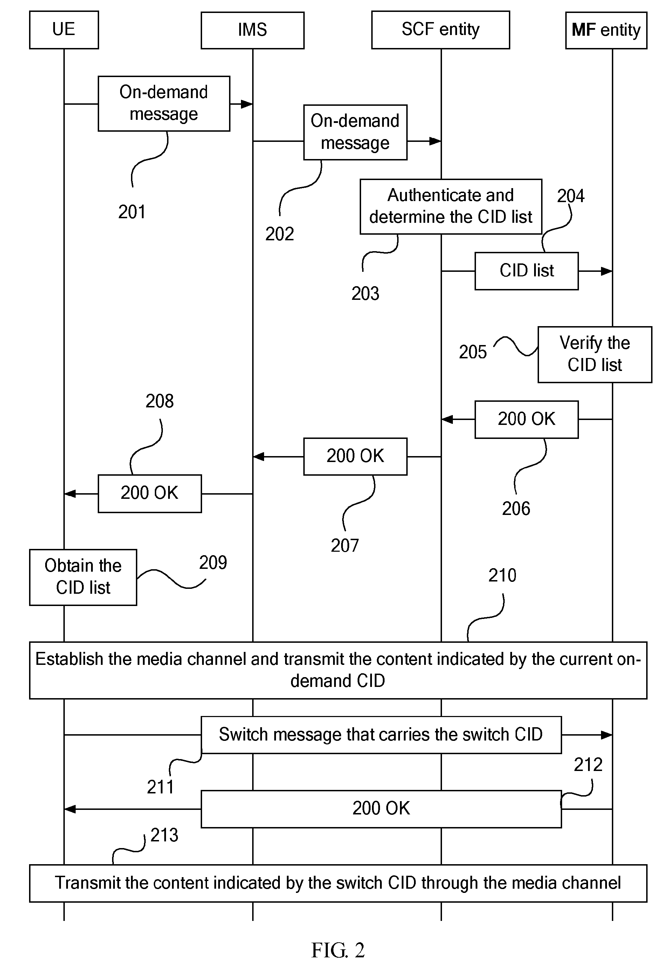

FIG. 2 is a flowchart of a method for content switching in the COD service according to a second embodiment. This embodiment takes the IPTV service based on the IP Multimedia Subsystem (IMS) as an example. The UE interacts with the network device via the IMS Core. The network device may be an SCF entity or an MF entity. The method includes:
Step 201: The UE sends a content-on-demand message to the IMS Core. The content-on-demand message carries the current COD ID, and may also carry one or multiple CIDs for subsequent expected contents on demand.

The CIDs may be carried in the header of the content-on-demand message, namely, Session Initial Protocol (SIP) header, or in the body of the content-on-demand message, namely, Session Description Protocol (SDP) or eXtensible Makeup Language (XML). The details are as follows:
1. The CIDs are carried in the SIP header.
   Method 1: TO: current COD ID: CID for the first expected content on demand: CID for the second expected content on demand: CID@domain.com;
   Method 2: A newly extended header is used, for example, Switch: CID for the first expected content on demand, and CID for the second expected content on demand,...
2. The CIDs are carried in SDP description.
   The CID for expected content on demand is carried in line a of the SDP description, for example, a=switch-list: CID for the first expected content on demand, and CID for the second expected content on demand,...
3. The CIDs are carried in XML description:
   Step 202: The IMS Core routes the content-on-demand message to the SCF entity.
   Step 203: The SCF entity obtains the subscription data of the UE according to the content-on-demand message, authenticates the access rights of the CIDs carried in the content-on-demand message based on the subscription data, and deletes the CIDs that do not have the access rights. The SCF entity may also obtain all the CIDs of the UE that have the access rights based on the subscription data.
   Step 204: The SCF entity routes the content-on-demand message to the MF entity corresponding to the current COD ID; the content-on-demand message carries the authenticated CIDs that have the access rights.
   Step 205: The MF entity parses the content-on-demand message to check whether the media channel corresponding to the current COD ID can be reused for the CIDs for expected content on demand carried in the content-on-demand message. Then, the MF entity combines the CIDs that can reuse the media channel to a CID list. Alternatively, the MF entity obtains the CIDs that can reuse the media channel corresponding to the current COD ID among all the CIDs that have the access rights on the UE and generates a CID list. That is, if the content-on-demand message carries only the current COD ID, the CIDs in the CID list are determined among all the CIDs that have the access rights on the UE; or, if the content-on-demand message carries the current COD ID and CID for expected content on demand, the CIDs in the CID list can be determined among all the CIDs that have the access rights or among only the CIDs for expected content on demand on the UE.
   Step 206-208: The MF entity returns the CID list via a 200 OK message in response to the content-on-demand request to the UE.

The CIDs in the CID list carried in the 200 OK message can be carried in the SIP header, SDP description, or XML description. For details, refer to the methods in step 21.

The CIDs in the CID list can be in SIP URL format, RT SP URL format, or ContentID format. Step 209: The UE obtains the CID list.

Step 210: The UE establishes a media channel with the MF entity. Through this media channel, the MF entity transmits the content corresponding to the current COD ID. This media channel may be a media control channel and/or a media delivery channel.

Step 211: If the UE requires a quick content switching, the UE can select the switching CIDs carried in the CID list and send a switching message that carries the switching CID to the MF entity.

The switching message may be a Real Time Streaming Protocol (RTSP) message or a SIP message. For the RTSP message, the switching CID may be carried in the Request URI or RTSO header. If the switching CID is carried in the Request URI, the implementation is RTSP URL/?switch=ContentID or RTSP URL /?switch=SIP URI, or RTSP URI is directly entered in Request URI. The switching CID may also be carried in the extended RTSP header.

Step 212: After obtaining the switching CID, the MF entity returns a response (200 OK) to the UE, and determines the new media location based on the switching CID to obtain the content corresponding to the switching CID.

Step 213: The MF entity reuses the media channel that is established based on the current COD ID and sends the switched content to the UE through this media channel.

The content-on-demand message in the embodiment may carry only the current COD ID or the current COD ID plus one or multiple CIDs for subsequent expected contents on demand. The MF entity determines the CIDs that can reuse the media channel among the CIDs for expected content on demand or among all the CIDs that have the access rights on the UE. Then, the MF entity sends the determined CIDs via a message in response to the content-on-demand message. The methods of carrying these CIDs and the formats of these CIDs can be diversified. This embodiment reuses the media channel, saves the network resources, and increases the speed of content switching. It is applicable to different scenarios.

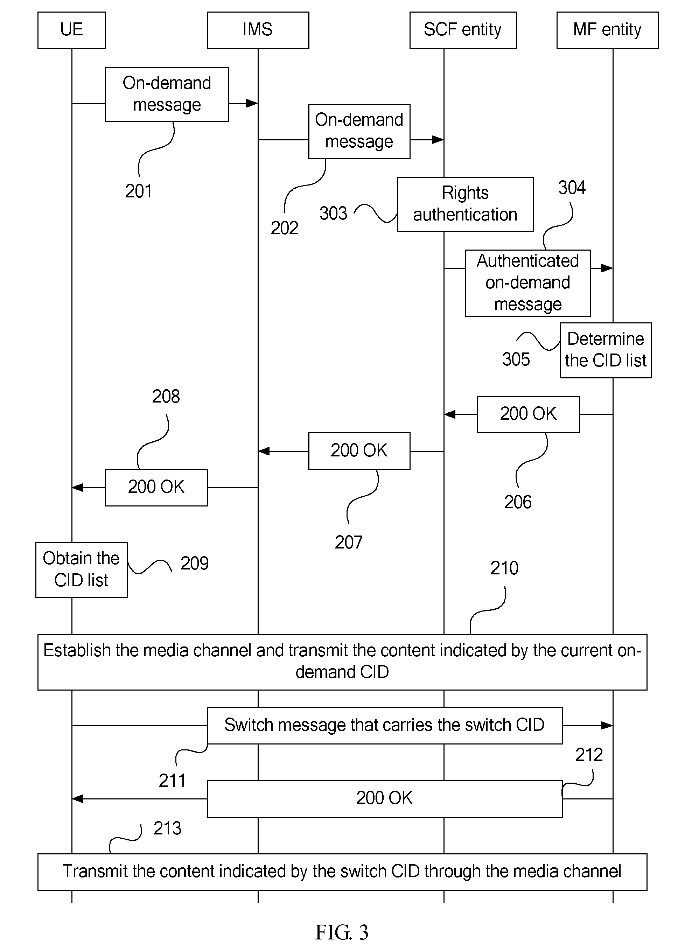

FIG. 3 is a flowchart of a method for content switching in the COD service according to a third embodiment. Different from the second embodiment, it is the SCF entity that reuses the media channel. That is, the following steps 303-305 replace the preceding steps 203-205, and the other steps of this embodiment are the same as those of the second embodiment.

Step 303: The SCF entity obtains the subscription data of the UE based on the content-on-demand message, and obtains all the CIDs that have the access rights on the UE based on the subscription data. Then, the SCF entity determines the CIDs that can reuse the media channel corresponding to the current COD ID among all the CIDs that have the access rights to generate a CID list; or the SCF entity can determine the CIDs that have the access rights and can reuse the media channel corresponding to the current COD ID among the CIDs for expected content on demand carried in the content-on-demand message to generate a CID list.

Step 304: The SCF entity routes the content-on-demand message carrying the CID list to the MF entity corresponding to the current COD ID.

Step 305: The MF entity parses the content-on-demand message and sends the CID list to the UE, or authenticates the CIDs in the CID list, so as to check whether the CIDs can reuse the media channel corresponding to the current COD ID and obtain the authenticated CID list.

In this embodiment, the SCF entity determines the CID list and sends it to the MF entity, which forwards the CID list to the UE. Alternatively, the CID list can be sent directly to the UE by the SCF entity rather than being forwarded by the MF entity.

The content-on-demand message in the embodiment may carry only the current COD ID or the current COD ID plus one or multiple CIDs for subsequent expected content on demand. The SCF entity determines the CIDs that can reuse the media channel among the CIDs for subsequent expected content on demand or among all the CIDs that have the access rights on the UE. Then, the SCF entity sends the determined CID list via a message in response to the content-on-demand message. The methods of carrying these CIDs and the formats of these CIDs can be diversified. This embodiment reuses the media channel, saves the network resources, and increases the speed of content switching. It is applicable to different scenarios.

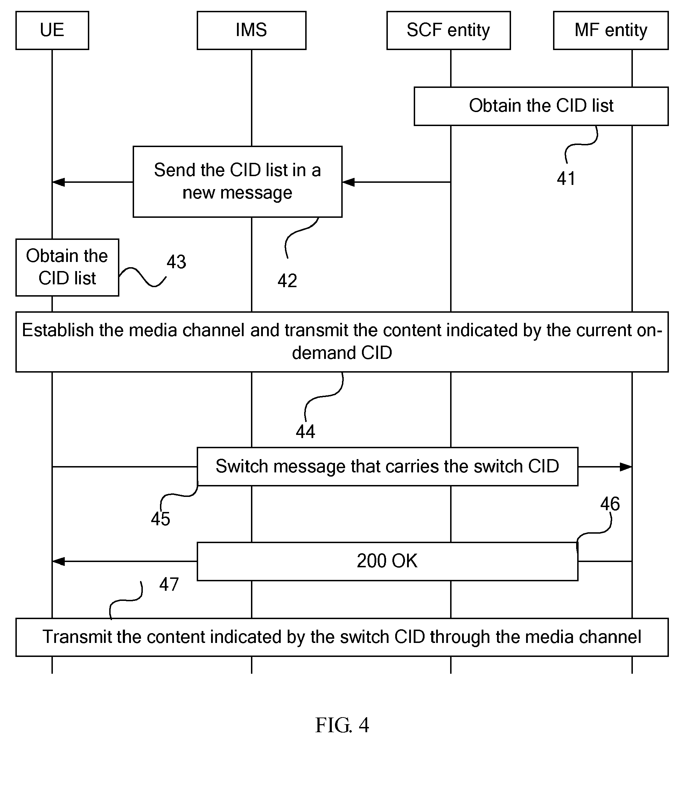

FIG. 4 is a flowchart of a method for content switching in the COD service according to a fourth embodiment. Different from the implementation of embodiments 2 and 3 where the CID list is returned via a message in response to the content-on-demand message, the CID list is returned in the new message to the UE in this embodiment. The method includes:
Step 41: The network device obtains the CID list, where the CIDs can reuse the media channel corresponding to the current COD ID. The CID list can be obtained by the MF entity in the second embodiment, by the SCF entity in the third embodiment, or by both the MF entity and SCF entity. For details on the implementation, refer to the second or third embodiment, which will not be detailed herein.
Step 42: The network device initiates a new message to send the CID list. The new message can be a SIP Notify message, an Info message, or a Message message. The CID list may be carried in SIP header, or SDP description, or XML description. The CIDs in the CID list may be in ContentID format, SIP URL format, or RTSP URL format. The CID list may be sent by the SCF entity or MF entity.
Step 43: The UE obtains the CID list.
Step 44: The UE establishes a media channel with the network device according to the current COD ID. Through this media channel, the network device transmits the content corresponding to the current COD ID.

This step and steps 41, 42, and 43 are not in specified order. The UE may obtain the CID list first and then establish the media channel; or establish the media channel first and then obtain the CID list, or obtain the CID list and establish the media channel simultaneously.

Step 45: The UE initiates a switching message, which carries a switching CID in the CID list.

Step 46: The UE receives the response 200 OK message.

Step 47: The UE receives the content corresponding to the switching CID. The switched content is transmitted through the media channel.

The content-on-demand message in the embodiment may carry only the current COD ID or the current COD ID plus one or multiple CIDs for expected content on demand. The network device determines the CIDs that can reuse the media channel among the CIDs for expected content on demand or among all the CIDs that have the access rights on the UE. Then, the network device sends the determined CID list in a new message. The methods of carrying these CIDs and the formats of these CIDs can be diversified. This embodiment reuses the media channel, saves the network resources, and increases the speed of content switching. It is applicable to different scenarios.

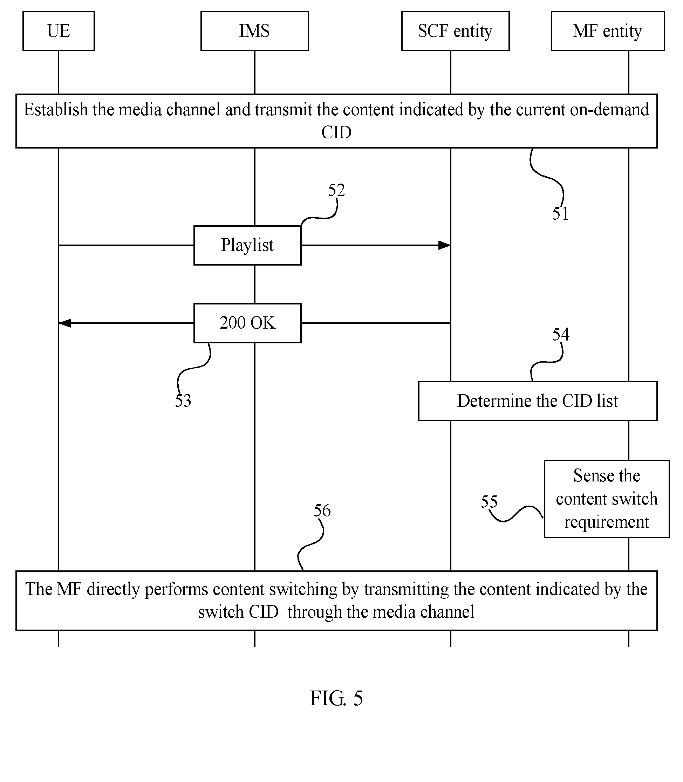

FIG. 5 is a flowchart of a method for content switching in the COD service according to a fifth embodiment. The method includes:
Step 51: The UE establishes the media channel corresponding to the current COD ID with the MF entity. Through this media channel, the MF entity transmits the current on-demand content to the UE. For details on the implementation, refer to the implementation flow of playing the current on-demand content in preceding embodiments: The UE sends a content-on-demand message that carries the current COD ID. The SCF entity forwards the content-on-demand message to the MF entity corresponding to the current COD ID. The MF entity establishes the media channel corresponding to the current COD ID with the UE through negotiation. Through the media channel, the MF entity transmits the content corresponding to the current COD ID to the UE.
Step 52: The UE sends the playlist configured on the UE to the SCF entity. The playlist includes one or multiple CIDs for expected content on demand and may be configured through the HTTP message, SIP message, or non-session message over the Ut interface.
Step 51 and step 52 are not in specified order. The current on-demand content may be played first and then the playlist is obtained; or, the playlist is obtained first and then the current on-demand content is played; or, the content-on-demand message is sent together with the playlist.
Step 53: The SCF entity returns a 200 OK message.
Step 54: The network device determines the switching CIDs that can reuse the media channel corresponding to the current COD ID and combines the switching CIDs to a CID list. The network device that determines the CID list can be the SCF entity or MF entity. For details, refer to the preceding embodiments.
Step 55: The network device senses the content switching as required, for example, after the current on-demand content is played or the network side needs to transmit new content.
Step 56: The MF entity directly transmits the content corresponding to the switching CID to the UE through the established media channel. The switching CID is obtained from the pre-stored playlist for content switching.

In this embodiment, the UE stores the playlist at the network side beforehand. The network device obtains the CID list that can reuse the media channel based on the playlist, and does not send the CID list to the UE, but directly performs content switching automatically after sensing the content switching as required.

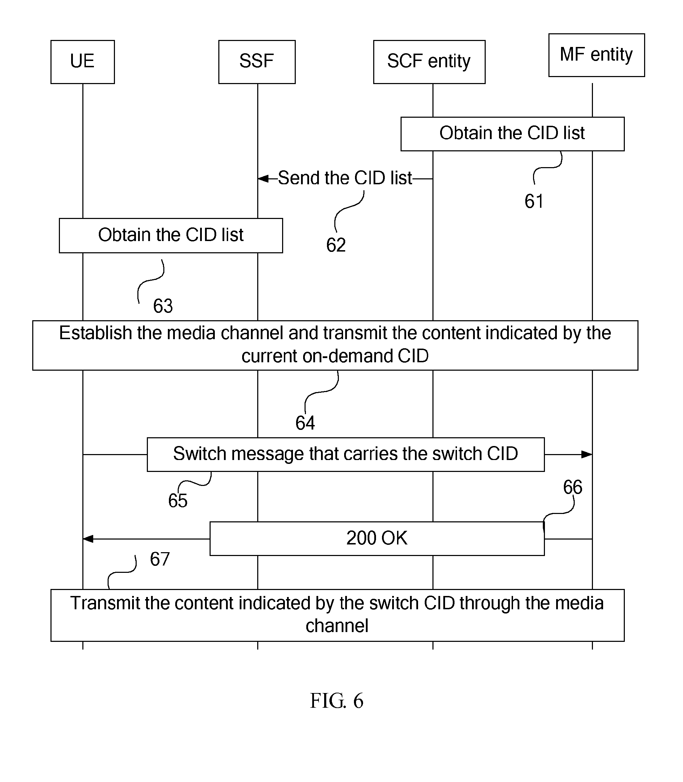

FIG. 6 is a flowchart of a method for content switching in the COD service according to a sixth embodiment. Different from the implementation of the second, third, and fourth embodiments, where the CID list is returned in the message to the UE, this embodiment adopts a Service Select Function entity (SSF entity) to provide the playlist for the UE. The playlist may be sent to the UE once or in batches. The method includes:
Step 61: The network device obtains the CID list. The CIDs in the CID list can reuse the media channel corresponding to the current COD ID. The CID list can be obtained by the MF entity in the second embodiment, by the SCF entity in the third embodiment, or by both the MF entity and SCF entity. For details on the implementation, refer to the second and third embodiments.
Step 62: The CID list obtained in step 61 is sent to the SSF. The CID list can be carried in a new message or the response. It can be carried in the header or message body, not limited herein. The CIDs in the CID list may be in ContentID format, SIP URL format, or RTSP URL format.
Step 63: The UE interacts with the SSF to obtain the CID list using messages such as HTTP messages. This embodiment takes the EPG mode as an example. That is, the SSF sends the CID list in EPG mode to the UE. The UE can obtain the entire CID list from the SSF once or in batches.
Step 64: The UE sends an on-demand request that carries the current COD ID. Based on the current COD ID, the network device establishes the media channel with the UE and transmits the content corresponding to the CID to the UE through the media channel.

This step and steps 61, 62, and 63 are not in specified order. It is allowed that the UE obtains the CID list first and then initiates an on-demand request to establish the media channel corresponding to the current COD ID; or, the UE initiates an on-demand request first to establish the media channel corresponding to the current COD ID and then obtains the CID list; or, the UE performs the two operations simultaneously.

Step 65: The UE initiates a switching message that carries the switching CID. The switching CID is a CID in the CID list that can reuse the media channel obtained from the EPG. The switching message may be a SIP message or RTSP message.

Step 66: The UE receives the response 200 OK message.

Step 67: The UE receives the content corresponding to the switching CID. The switched content is transmitted through the media channel.

The content-on-demand message in step 64 of the embodiment may carry only the current COD ID or the current COD ID plus CIDs for expected content on demand. The network device determines the CIDs that can reuse the media channel among the CIDs for expected content on demand or among all the CIDs that have the access rights on the UE. Then, the network device sends the determined CID list via a new message or a message in response to the content-on-demand message. The methods of carrying these CIDs and the formats of these CIDs can be diversified. This embodiment reuses the media channel, saves the network resources, and increases the speed of content switching. It is applicable to different scenarios.

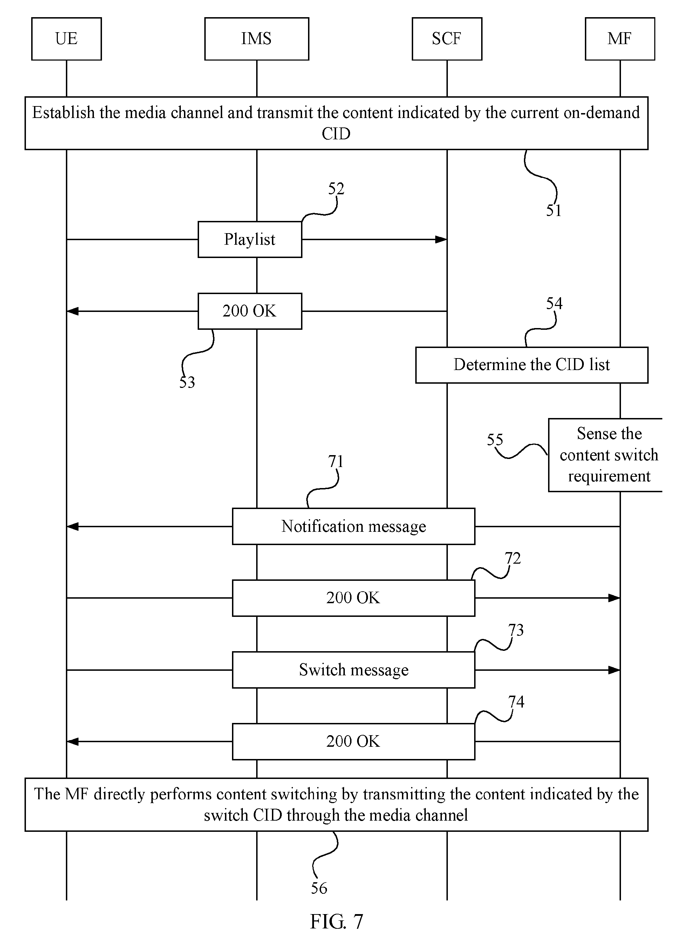

FIG 7 is a flowchart of a method for content switching in the COD service according to a seventh embodiment. After step 55 and step 56 in the fifth embodiment, steps 71-74 are added.

Step 71: The MF entity sends a notification message to the UE to notify the UE of the content switching. The message carries the switching CID.

Step 72: The UE returns a 200 OK message to the MF entity.

Step 73: The UE sends a switching message to the MF entity.

Step 74: The MF entity returns a 200 OK message to the UE. In this embodiment, the UE stores the playlist at the network side beforehand. After determining the CID list that can reuse the media channel based on the playlist, the network device does not send the CID list to the UE, but notifies the UE of content switching after sensing the content switching as required and performs content switching after receiving the switching message from the UE.

It is understandable to those skilled in the art that all or part of the steps of the method according to the embodiments of the present invention may be implemented by a program instructing relevant hardware. The program may be stored in a computer-readable storage medium such as ROM/RAM, magnetic disk, and compact disk. When being executed, the program performs the steps described in the preceding embodiments.

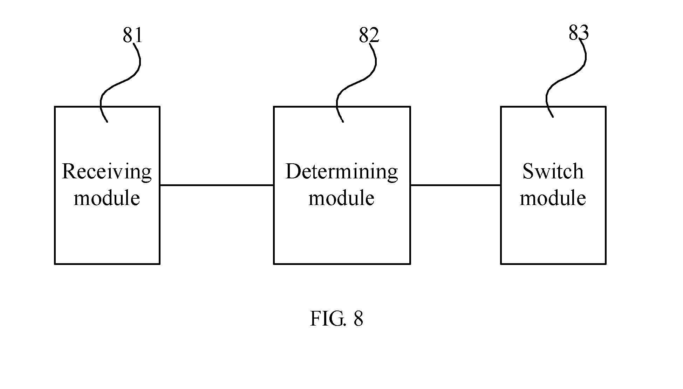

FIG. 8 shows the structure of a device for content switching in the COD service according to the first embodiment. The device includes:
a receiving module 81, configured to receive the current COD ID sent by the UE;
a determining module 82, configured to determine the CID list that can reuse the media channel corresponding to the current COD ID; and
a switching module 83, configured to perform content switching based on the CID list.

The current COD ID may be carried in the content-on-demand message, which may carry the current COD ID or the current COD ID plus the CID for expected content on demand. The CIDs in the CID list may be determined among the CIDs for expected content on demand or all the CIDs that have the access rights. The CID list may be carried in a message in response to the content-on-demand message or a new message. CIDs can be carried in the content-on-demand message or the CID list in SIP header, or SDP description, or XML description. The CIDs may be in SIP URL format, RTSP URL format, or ContentID format.

This embodiment may also include an establishing module, and the switching module 83 may specifically include an information module. The establishing module is configured to establish the media channel with the UE based on the current COD ID and transmit the content corresponding to the current COD ID to the UE. The information module is configured to receive the switching messages sent by the UE and determine the switching CID, the switching CID being in the CID list. The establishing module is further configured to transmit the content corresponding to the switching CID to the UE via the media channel.

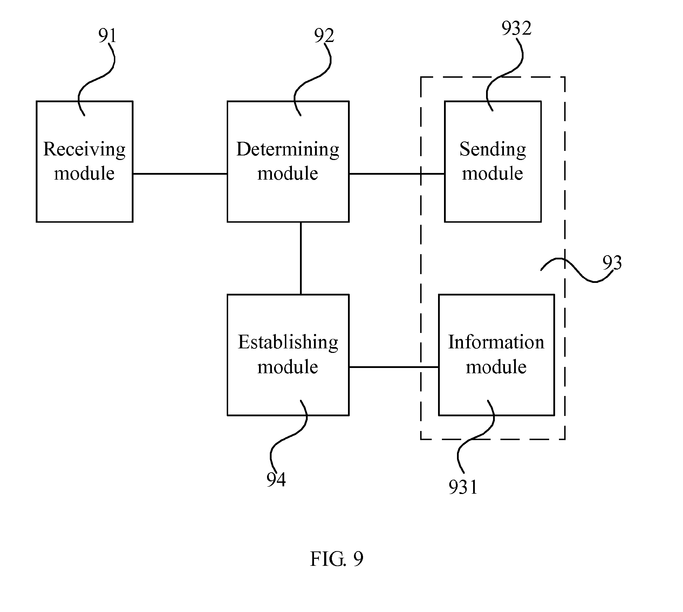

This embodiment reuses the media channel, saves the network resources, and increases the speed of content switching. FIG. 9 shows a structure of a device for content switching in the COD service according to the second embodiment. The device includes:
a receiving module 91, configured to receive the content-on-demand message that carries the current COD ID sent by the UE;
a determining module 92, configured to determine the CID list that can reuse the media channel corresponding to the current COD ID;
a switching module 93, including a sending module 932 configured to send the CID list to the UE and an information module 931 configured to receive the switching message sent by the UE, the switching message carrying the switching CID; and
an establishing module 94, configured to establish the media channel with the UE based on the current COD ID and transmit the content corresponding to the current COD ID to the UE via the media channel; and further configured to transmit the content corresponding to the switching CID to the UE via the media channel.

In this embodiment, the determining module determines the CIDs that can reuse the media channel; then, after the UE initiates a switching message that carries a CID in the CID list, the media channel may be reused directly, which saves the network resources and increases the speed of content switching.

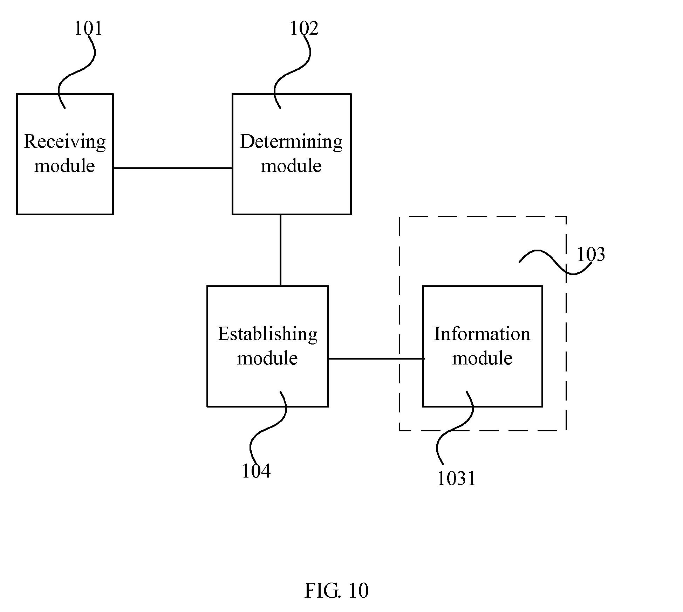

FIG. 10 shows the structure of a device for content switching in the COD service according to the third embodiment. The device includes:
a receiving module 101, configured to receive the content-on-demand message that carries the current COD ID sent by the UE;
a determining module 102, configured to determine the switching CID in the playlist that can reuse the media channel corresponding to the current COD ID, where the CID list includes the switching CID;
a switching module 103, including an information module 1031 configured to obtain the playlist configured for the UE; and
an establishing module 104, configured to: establish the media channel with the UE based on the current COD ID; transmit the content corresponding to the current COD ID to the UE through the media channel; transmit the content corresponding to the switching CID to the UE through the media channel; and after the network device senses the content switching as required, transmit the content corresponding to the switching CID to the UE through the media channel.

In this embodiment, the UE stores the playlist on the network side beforehand. Then, the network device determines the CID list that can reuse the media channel based on the playlist. After sensing the content switching as required, the network device performs content switching directly rather than sends the CID list to the UE. This reuses the media channel, saves the network resources, increases the speed of content switching, and shortens the flow.

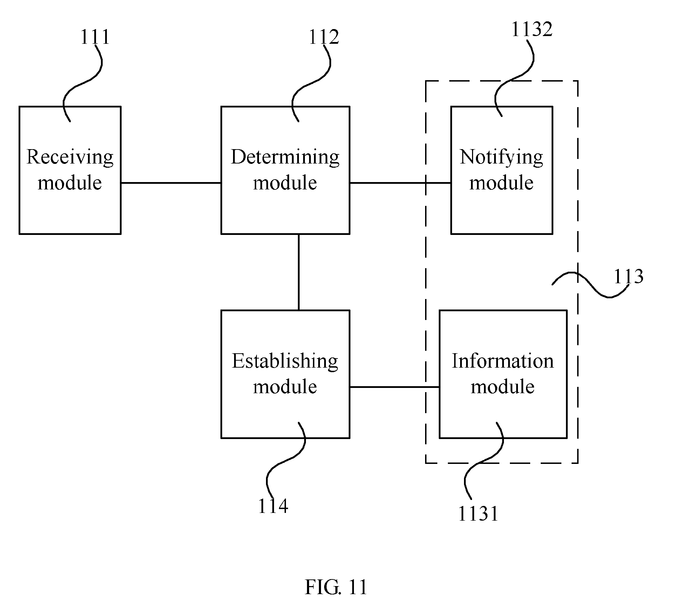

FIG. 11 shows the structure of a device for content switching in the COD service according to the fourth embodiment. The device includes:
a receiving module 111, configured to receive the content-on-demand message that carries the current COD ID sent by the UE;
a determining module 112, configured to determine the switching CID in the playlist that can reuse the media channel corresponding to the current COD ID, where the CID list includes the switching CID;
a switching module 113, including an information module 1131 configured to obtain the playlist configured for the UE and a notifying module 1132 configured to send a notification message that carries the switching CID to the UE to notify the UE of content switching after the network device senses the content switching as required; and
an establishing module 114, configured to: establish the media channel with the UE based on the current COD ID; transmit the content corresponding to the current COD ID to the UE through the media channel; and transmit the content corresponding to the switching CID through the media channel to the UE after receiving the switching message from the UE.

In this embodiment, the UE stores the playlist on the network side beforehand. Then, the network device determines the CID list that can reuse the media channel based on the playlist. Instead of sending the CID list to the UE, the network device notifies the UE of content switching after sensing the content switching as required and performs content switching directly after receiving a switching request from the UE. This reuses the media channel, saves the network resources, increases the speed of content switching, and shortens the flow.

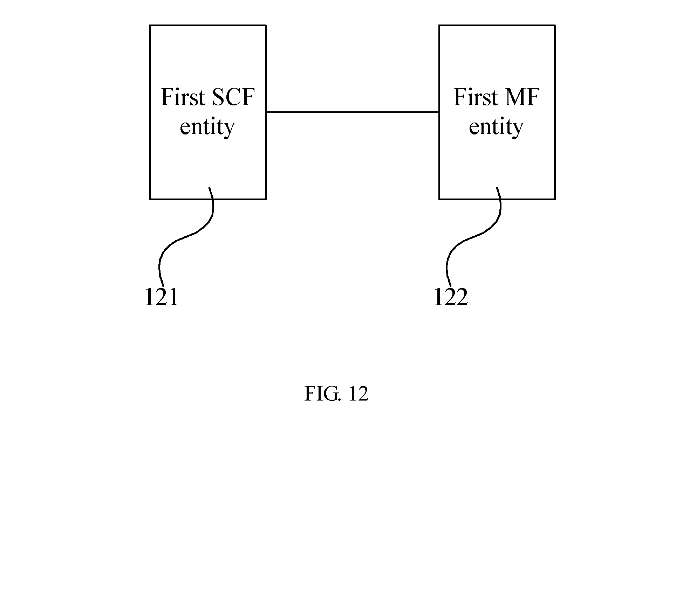

FIG. 12 shows the structure of a system for content switching in the COD service according to the first embodiment. The system includes:
a first SCF entity 121, configured to: receive the current COD ID sent by the UE; and
a first MF entity 122, configured to: determine the CID list that can reuse the media channel corresponding to the current COD ID; perform content switching based on the CID list. Further, the first MF entity 122 is configured to: establish the media channel corresponding to the current COD ID with the UE; transmit the content corresponding to the current COD ID through the media channel; receive the switching message sent by the UE and determine the switching CID from the CID list; and transmit the content corresponding to the switching CID through the media channel.

Specifically, the first MF entity 122 sends the CID list to the UE and receives the switching message that carries the switching CID sent by the UE. The switching CID is in the CID list. Therefore, the first MF entity 122 may reuse the channel to transmit the content corresponding to the switching CID to the UE.

Alternatively, the first SCF entity 121 receives the playlist of the UE. The MF entity 122 determines the switching CIDs based on the playlist. The switching CIDs are combined to a CID list. Thus, after sensing the content switching, for example, the current on-demand content is played or new content need to be transmitted proactively, the first MF entity 122 directly reuses the media channel to transmit the content corresponding to the switching CID to the UE.

Alternatively, the first MF entity 122 is further configured to send a notification message that carries the switching CID to the UE. Particularly, after receiving the switching message sent by the UE, the first MF entity 122 transmits the content corresponding to the switching CID through the media channel to the UE. That is, after sensing the content switching as required, the first MF entity 122 notifies the UE of content switching and performs content switching after receiving the switching message from the UE.

The CIDs, either the current COD ID or current COD ID plus CID for expected content on demand, may be carried in the content-on-demand message. The CIDs in the CID list may be determined among the CIDs for expected content on demand or all the CIDs that have the access rights. The CID list may be carried in a message in response to the content-on-demand message or a new message. CIDs may be carried in the content-on-demand message or CID list in SIP header, or SDP description, or XML description. The CID format may be SIP URL, RTSP URL, or ContentID.

In this embodiment, the MF entity determines the CID list. The CIDs in the CID list may reuse the media channel corresponding to the current COD ID. When transmitting the content corresponding to the switching CID, the network device may reuse the media channel directly, which saves the network resources and increases the speed of content switching. After determining the CID list, the MF entity may send the CID list to the UE. After receiving the switching message from the UE, the MF entity performs content switching; or, the MF entity does not send the CID list to the UE, but directly performs content switching after sensing the content switching as required; or, the MF entity does not send the CID list to the UE, but notifies the UE of content switching after sensing the content switching as required and performs content switching after receiving the switching message from the UE.

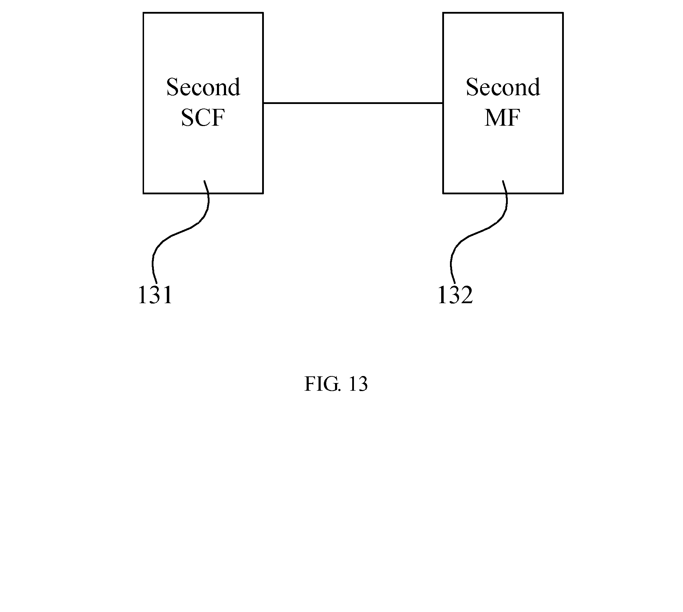

FIG. 13 shows the structure of a system for content switching in the COD service according to a second embodiment. The system includes:
a second SCF entity 131, configured to: receive the current COD ID sent by the UE and determine the CID list that can reuse the media channel corresponding to the current COD ID; and
a second MF entity 132, configured to perform content switching based on the CID list, and further configured to: establish the media channel corresponding to the current COD ID with the UE and transmit the content corresponding to the current COD ID through the media channel; receive the switching message from the UE and determine the switching CID in the CID list; and transmit the content corresponding to the switching CID through the media channel.

Specifically, the second SCF entity 131 sends the CID list directly to the UE; or, the second SCF entity 131 sends the CID list to the second MF entity 132, which then forwards the CID list to the UE. The second MF entity 132 is further configured to receive the switching message that carries the switching CID from the UE, where the switching CID is in the CID list.

Or, specifically, the SCF entity 131 determines the switching CID in the CID list, based on the received playlist of the UE.

The first MF entity 132 is further configured to send a notification message that carries the switching CID to the UE. Specifically, after receiving the switching message sent by the UE, the first MF entity 132 transmits the content corresponding to the switching CID through the media channel to the UE.

In this embodiment, the SCF entity determines the CID list. The switching CIDs in the CID list can reuse the media channel corresponding to the current COD ID. When transmitting the content corresponding to the switching CID, the network device can reuse the media channel directly, which saves the network resources and increases the speed of content switching. After determining the CID list, the SCF entity may send the CID list to the UE. After receiving the switching message from the UE, the SCF entity performs content switching. The CID list may be sent to the UE directly, or sent to the MF entity by the SCF entity and then forwarded to the UE by the MF entity; or, the SCF entity does not send the CID list to the UE, but directly performs content switching after sensing the content switching as required; or, the SCF entity does not send the CID list to the UE, but notifies the UE of content switching after sensing the content switching as required and performs content switching after receiving the switching message from the UE.

It should be noted that the above embodiments are merely provided for elaborating the technical solutions of the present invention, but not intended to limit the present invention. Although the present invention has been described in detail with reference to the foregoing embodiments, it is apparent that those skilled in the art may make modifications to the technical solutions described in the above embodiments, or may make equivalent replacements to some of the technical features without departing from the spirit and scope of the embodiments of the invention.

## Claims

1. A method for content switching in content on demand (COD) services, comprising:
receiving a current COD identifier (ID) sent by a user equipment (UE);
determining a content identifier (CID) list that can reuse a media channel corresponding to the current COD ID; and
performing the content switching based on the CID list.

2. The method according to claim 1, further comprising:
establishing the media channel with the UE according to the current COD ID; and
transmitting a content corresponding to the COD ID to the UE through the media channel.

3. The method according to claim 1, wherein the performing of the content switching based on the CID list comprises:
receiving a switching message from the UE and determining a switching CID, wherein the switching CID is in the CID list; and
transmitting a content corresponding to the switching CID to the UE through the media channel.

4. The method according to claim 1, wherein: before performing the content switching based on the CID list, the method further comprises:
sending the CID list to the UE.

5. The method according to claim 4, wherein:
the sending of the CID list to the UE further comprises:
sending, by a service select function (SSF), the CID list to the UE.

6. The method according to claim 1 or 3, wherein:
the determining of the CID list that can reuse the media channel corresponding to the current COD ID comprises:
obtaining a playlist of the UE; and
determining in the playlist the switching CIDs that can reuse the media channel corresponding to the current COD ID, the switching CIDs constituting the CID list.

7. The method according to claim 6, wherein:
before performing the content switching based on the CID list, the method further comprises:
sending a message to the UE, wherein the message carries the switching CID and is used to notify the UE of the content switching.

8. The method according to claim 1, wherein:
contents corresponding to the switching CIDs in the CID list and contents corresponding to the current COD IDs are in a same media function (MF) entity; and
the contents corresponding to the switching CIDs in the CID list and the contents corresponding to the current COD IDs use a same bandwidth, or the contents corresponding to the switching CIDs in the CID list uses a smaller bandwidth than the contents corresponding to the current COD IDs.

9. The method according to claim 1, wherein:
the current COD ID is carried in a content-on-demand message, wherein the content-on-demand message carries CIDs of expected contents on demand.

10. The method according to claim 9, wherein:
the CIDs in the CID list are CIDs in the CIDs for expected contents on demand that can reuse the media channel.

11. The method according to claim 4 or 7, wherein:
the current COD ID is carried in a content-on-demand message, and sent to the UE through a response message carrying the CID list and corresponding to the content-on-demand message or through an initiation message carrying the CID list.

12. The method according to claim 11, wherein:
the CID list is carried in a Session Initial Protocol (SIP) header, or Session Description Protocol (SDP), or extensible Makeup Language (XML).

13. A device for content switching in content on demand (COD) services, comprising:
a receiving module, configured to receive a current COD identifier (ID) sent by a user equipment (UE);
a determining module, configured to determine a content identifier (CID) list that can reuse a media channel corresponding to the current COD ID; and
a switching module, configured to perform the content switching based on the CID list.

14. The device according to claim 13, further comprising:
an establishing module, configured to: establish the media channel with the UE according to the current COD ID, and transmit contents corresponding to the current COD ID to the UE through the media channel.

15. The device according to claim 14, wherein:
the switching module comprises an information module, configured to receive switching messages from the UE, and determine switching CID, wherein the switching CID is in the CID list; and
the establishing module is further configured to transmit contents corresponding to the switching CID to the UE through the media channel.

16. The device according to claim 15, wherein:
the switching module further comprises a sending module, configured to transmit the CID list to the UE; and
the information module is configured to receive switching messages that carry the switching CID sent from the UE, wherein the switching CID is in the CID list.

17. The device according to claim 15, wherein:
the information module is configured to obtain a playlist configured for the UE; and
the determining module is configured to determine in the playlist switching CIDs that can reuse the media channel corresponding to the current COD ID, wherein the switching CIDs is in the CID list.

18. The device according to claim 17, wherein:
the switching module comprises a notifying module, configured to sent a notification message to the UE to notify the UE of the content switching, wherein the notification message carries the switching CID; and
the information module is further configured to receive the switching message from the UE.

19. A system for content switching in content on demand (COD) services, comprising:
a first service control function (SCF) entity, configured to receive a current COD identifier (ID) sent by a user equipment (UE); and
a first media function (MF) entity, configured to determine a content identifier (CID) list that can reuse a media channel corresponding to the current COD ID, and perform content switching based on the CID list.

20. The system according to claim 19, wherein:
the first MF entity is further configured to: establish the media channel corresponding to the current COD ID with the UE; transmit contents corresponding to the current COD ID through the media channel; receive switching messages from the UE and determine switching CIDs, wherein the switching CIDs is in the CID list; and transmit contents corresponding to the switching CIDs through the media channel.

21. The system according to claim 20, wherein:
the first MF entity is configured to send the CID list to the UE and receive switching messages that carry the switching CIDs from the UE.

22. The system according to claim 20, wherein:
the first SCF entity is configured to receive a playlist configured for the UE; and
the first MF entity is configured to determine the switching CID in the playlist.

23. The system according to claim 22, wherein:
the first MF entity is further configured to send a notification message that carries the switching CID to the UE, and specifically to transmit the content corresponding to the switching CID through the media channel after receiving the switching message from the UE.

24. A system for content switching in content on demand (COD) services, comprising:
a second service control function (SCF) entity, configured to: receive a current COD identifier (ID) sent by a user equipment (UE); determine a content identifier (CID) list that can reuse a media channel corresponding to the current COD ID; and
a second media function (MF) entity, configured to perform content switching based on the CID list.

25. The system according to claim 24, wherein:
the second MF entity is further configured to: establish the media channel corresponding to the current COD ID with the UE; transmit contents corresponding to the current COD ID through the media channel; receive a switching message from the UE and determine switching CIDs, wherein the switching CIDs is in the CID list; and transmit contents corresponding to the switching CIDs through the media channel.

26. The system according to claim 25, comprising:
the second SCF entity is configured to directly send the CID list to UE or to the second MF entity; and
the second MF entity is configured to forward the CID list to the UE, and receive switching messages that carries the switching CIDs sent from the UE.

27. The system according to claim 25, comprising:
the second SCF entity is configured to determine the switching CID in a received playlist configured for the UE.

28. The system according to claim 27, wherein:
the second MF entity is further configured to send a notification message that carries the switching CID to the UE, and specifically to transmit the contents corresponding to the switching CIDs through the media channel after receiving the switching message from the UE.
